# EUROPEAN PATENT SPECIFICATION

(11) **EP 0 993 083 B1**
(45) Date of publication and mention of the grant of the patent: **08.01.2003**
(21) Application number: 99119118.0
(22) Date of filing: 04.10.1999
(51) Int. Cl.: H01R 13/74, H02B 1/044, F16B 21/06

(54) **A contact clip, intended most notably for busbar systems**
Kontaktklammer, insbesondere geeignet für Sammelschienensysteme
Agrafe de contact, notamment pour systèmes de barres omnibus

(30) Priority: 05.10.1998 FR 9812468
(43) Date of publication of application: 12.04.2000
(73) Proprietor: FCI, 75009 Paris (FR)
(72) Inventor: Chevassus-More, Alain, 25370 Touillon et Loutelet (FR); Pernot, Christian, 25300 Pontarlier (FR)
(74) Representative: Beetz & Partner Patentanwälte

(56) References cited:
- GB-A- 1 028 208
- US-A- 5 068 771
- US-A- 5 704 752

## Description

The present invention relates to a clip for the placing in electrical and mechanical contact with, and the retention of a contact pin within an opening in a conductor manufactured in sheet or board form as described in the preamble portion of claim 1. Such contact clips are the preferred device for the connection of busbar systems.

Clips of this type possess a sleeve which fits into a corresponding opening in the conductor in sheet or board form. A lip or other feature widening its diameter, forming a shoulder abutment, helps maintain the clip in position for the purpose of crimping it into the opening. On the opposite face of the sheet or board conductor a backing ring is positioned on the sleeve which projects above the surrounding surface. The contact pin, which is inserted into the sleeve, has a screw thread of a type permitting the pin to be maintained within the clip by means of a nut which is tightened up against the backing ring. This results in a deformation of the clip, thus ensuring very close contact between clip and the edges of the opening in the sheet or board conductor.

However, such a clip has numerous disadvantages. Firstly, it may be lost prior to the introduction of the contact pin due to the fact that crimp assembly on a sheet or board conductor, which is thin, does not permit good mechanical integrity to be ensured for a clip of large diameter. The clip may become detached and fall during shipment or during handling of the sheet or board conductor. Secondly, such a clip may easily jam or be incorrectly fitted such that it no longer bears down upon its entire contact surface, creating conditions in which low contact resistance can no longer be guaranteed. Moreover, when the contact pin is withdrawn, the clip is in most cases so misshapen that it cannot be used a second time.

US 5,068,771 discloses a clip for the placing in electrical and mechanical contact with, and the retention of a contact pin within an opening in a conductor in sheet or board form, including a cylindrical sleeve possessing at at least one of its ends shoulders for fitting against the edge of the opening or against an intervening component, wherein the sleeve possesses at at least one of its ends open slots extending parallel to its main axis, the edge of the sleeve at that end projecting above the surrounding surface and shaped in the form of a truncated cone, creating an abutment permitting the sleeve to fit into a corresponding annular groove created in the surface of a backing ring.

The object of the present invention is to provide a clip as described in the preamble of claim 1 that may be fitted to the sheet or board conductor in such a manner that there is no risk of its being lost, becoming unsuitable for reuse or jamming.

The problem as defined has been resolved as set out in the claims.

The preferred shapes of the parts for the embodiment of a clip as defined in the invention is described in the subclaims. The invention will be better understood with the help of the description of the two embodiments described hereinafter and with reference to the appended drawings in which:
Fig. 1 illustrates one embodiment of the clip in accordance with the invention, showing a sectional view, a plan view and a detail view of one of the ends of the sleeve.
Fig. 2 shows a second embodiment of the clip in accordance with the invention, seen in sectional and plan views.
Fig. 3 shows a backing ring used in conjunction with the clip in accordance with the invention.
Fig. 4 shows a specific arrangement intended to prevent rotary movement of the clip.

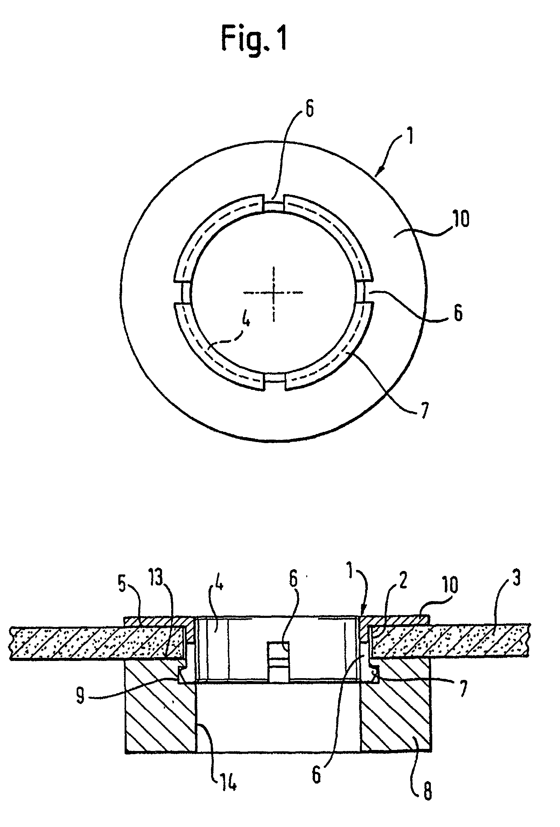

The clip in Figure 1 has a sleeve 4, which is cylindrical in form, with a diameter slightly smaller than the diameter of opening 2 in a conductor 3, which is in sheet or board form. The clip 1 possesses, on the top end of the cylindrical sleeve 4, a lip 10 whose bottom surface allows the clip to bear down upon on the conductor 3. The bottom end of the cylindrical sleeve 4 possesses an abutment 7 in the form of a double truncated cone with rounded edges, extending the outer diameter of the main body of the sleeve 4, at a sharp angle, and which diminishes towards the end in the direction of clip connection at a shallow angle. The double cone thus forms outside the sleeve 4 an abutment which enters annular groove 9, into which it fits, said groove being made in the surface of a corresponding backing ring 8.

The cylindrical sleeve possesses a number of slots 8 open towards the sleeve end possessing the abutment 7, imparting flexibility to the cylindrical body of the sleeve, in such a manner that the sleeve, including the abutment 7, is enabled to pass through opening 2 in the sheet or board conductor. Due to the ensuing spring-back effect, the clip can already at this stage of assembly be fitted to the sheet or board conductor without risk of its being lost, but is nevertheless removable due to the sharp angle of the double cone, if strong pressure is applied parallel to the main clip axis. The elastic reduction of the outer diameter of the abutment 7 is also necessary to allow the front edge of the clip sleeve to slot into place. The clip sleeve is all the easier to slot into place since the double cone has been given rounded edges, in order to ensure that there is more play in the assembly than would be the case if its edges had been made sharper.

The inclusion of such abutments allows the outer diameter of the clip sleeve 4 to be made smaller than is currently the case for identical opening sizes in the sheet or board conductor, with the result that a lesser level of precision is required for the opening and the diameter of the sleeve. This enables reductions to be achieved in manufacturing costs not only for the clip but also for the openings in the sheet or board conductor. Furthermore, the play between the clip and the opening in the sheet or board conductor allows the fit to be adjusted more minutely during the insertion of the contact pin, in such a manner that any jamming can effectively be avoided.

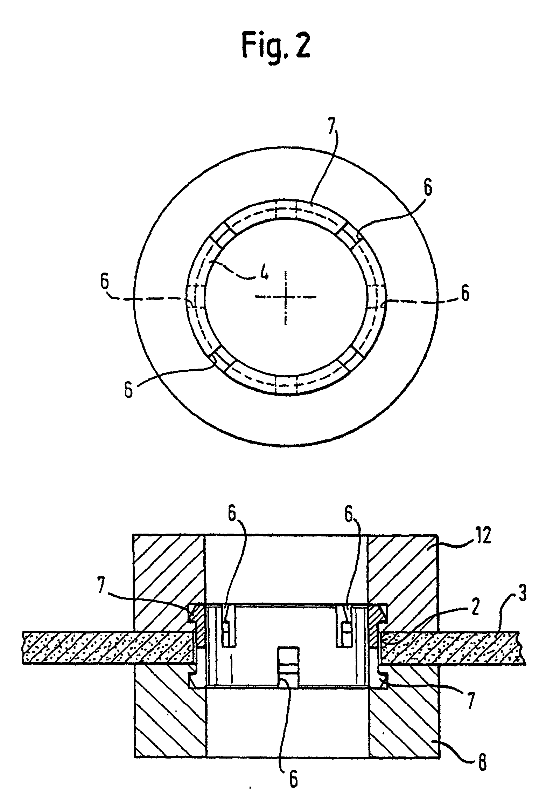

Figure 2 illustrates an embodiment of the clip 1 in accordance with the invention in which a second abutment 7 is provided in replacement for the lip 10, in such a manner that it becomes possible for this clip to include two backing rings, respectively 8 and 12, on each side of the sheet or board conductor 3. To accomplish this, four slots per face are made in the sleeve wall. In this embodiment, the clip does not act as a conductor of current, since it is independent of the surfaces ensuring electrical continuity. Consequently, in this case the clip may be manufactured in plastic. Similarly, the clip illustrated in figure 1 may, according to the chosen application, play no role in conducting electricity, and may therefore be manufactured in plastic.

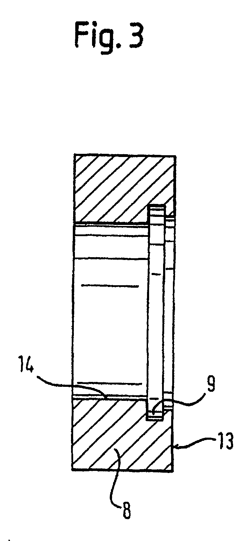

Figure 3 shows the backing ring with no clip fitted. It can be seen that on the right-hand side, the side through which the clip sleeve is inserted, the inner diameter matches approximately the outer diameter of the clip sleeve, whereas the diameter of the backing ring to the left of the groove 9 matches the inner diameter of the clip sleeve 4. In this way, it can be guaranteed that a contact pin inserted in the assembly formed by the clip and the backing ring is always positioned within the clip and backing ring with the same clearance.

In the case of an embodiment of the clip according to the invention, the contact pin inserted into the clip is also screwed into place. Since it is easier to orient the contact surfaces prior to tightening the screws, the clip is deformed to a lesser degree and may therefore be reused.

For contexts in which high levels of screw torque are applied to the contact pin within the sleeve, a special arrangement of the conductor 3 has been defined with the intention of preventing rotary movement of the insert in relation to the sheet or board conductor.

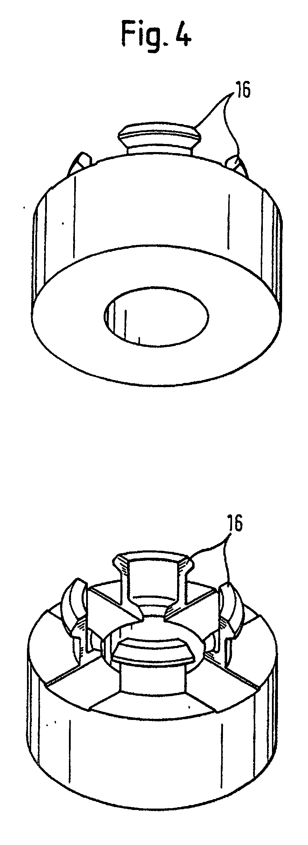

Figure 4 shows an example of this arrangement. The opening 2 in the conductor 3 is machined similarly to a gear wheel with an internal set of four teeth 15. The slots 6 in the envelope of the sleeve are deeper, in such a manner that the body of the sleeve 4 and the double cone shape of its termination form claws 16 which enter the kidney-shaped grooves defined by the teeth 15. The teeth 15 form abutments opposing rotary movement of the claws 16. The slots 6 are sufficiently deep to ensure that the lower surface of lip 10 of the insert bears down upon the conductor 3.

The clip as defined in the invention is particularly suitable for connecting conductors in sheet or board form, these being components in common use for busbars carrying high-amperage currents.

The invention is not limited to the embodiments described and presented here, but extends to all variants covered by the detailed claims.

## Claims

1. A clip (1) for the placing in electrical and mechanical contact with, and the retention of a contact pin within an opening (2) in a conductor (3) in sheet or board form, including a cylindrical sleeve (4) possessing at at least one of its ends shoulders (5) for fitting against the edge of the opening or against an intervening component, wherein the sleeve (4) possesses at at least one of its ends open slots (6) extending parallel to its main axis, the edge of the sleeve at that end projecting above the surrounding surface and shaped in the form of a truncated cone, creating an abutment (7) permitting the sleeve to fit into a corresponding annular groove (9) created in the surface of a backing ring (8), **characterized in that**
at both ends of the sleeve tapered abutments (7) are included, in addition to open slots (6), in such a manner as to allow two backing rings (8 and 12) to fit into place on either side of the conductor in sheet or board form (3).

2. A clip as defined in claim 1, in which the abutment (7) is a double truncated cone widening the outer diameter of the envelope of the sleeve (4), projecting at a sharp angle and diminishing at a shallow angle towards the end lying in the direction of the clip connection, its edges being rounded in order to increase clip connection play.

3. A clip as defined in claim 1, in which a lip (10) is included at one of the ends of the sleeve, said lip presenting a bearing surface (11) extending along a plane perpendicular to the main axis of the sleeve.

4. A clip as defined in any of the preceding claims, **characterized in that** several slots (6) open towards the same end, and with the same angular separation between each, are included in the sleeve (4).

5. A clip as defined in claim 1, **characterized in that** at least four slots (6), depending on connection force, are oriented toward each end of the sleeve (4), the width of said slots being variable in order to permit adjustment of the connection force, with an angular separation between any two neighbouring slots equal to 90°, or less depending on the total number of such slots.

6. A clip as defined in claim 1, **characterized in that** the slots (6) are deeper, in such a manner that the body of the sleeve (4) and its double-cone-shaped termination form claws (16) which enter kidney-shaped grooves (17) defined by teeth (15) inside the opening (2) of the conductor (3), such teeth (15) acting as abutments preventing rotation of the clip.

7. A clip as claimed in any one of the preceding claims, **characterized in that** in the area located between the annular groove (9) and the termination (13) nearest the sheet or board conductor (3), the inner diameter of the backing ring (8 or 12) matches the outer diameter of the body of the sleeve (4).

8. A clip as defined in claim 5, **characterized in that** in the area located between the annular groove (9) and the end (14) most distant from the sheet or board conductor (3), the inner diameter of the backing ring (8 and 12) matches the inner diameter of the sleeve (4).

9. The use of a clip as claimed in any of the preceding claims for the purpose of placing a contact pin in contact with a busbar conductor.

## Patentansprüche

1. Clip zur elektrischen und mechanischen Kontaktierung und zur Sicherung eines Kontaktstiftes in einer Öffnung (2) in einem plattenförmigen Leiter (3), der eine zylinderförmige Hülse (4) aufweist, die an mindestens einem ihrer Enden Schultern (5) zur Halterung am Öffnungsrand oder an einem zwischengeschalteten Teil aufweist, wobei der Hülsenmantel (4) mindestens zu einem Ende hin offene Schlitze (6) aufweist, die parallel zur Hülsenachse verlaufen und der Hülsenrand an diesem Ende kegelstumpfförmig über die Umgebungsfläche unter Ausbildung einer Rastschulter (7) geformt ist, mit der die Hülse in einer entsprechend einer Fläche eines Konterrings (8) ausgebildeten Ringnut verrastbar ist, **dadurch gekennzeichnet, daß**
an beiden Hülsenenden kegelstumpfförmige Rastschultern (7) und an beiden Enden mündende Schlitze (6) ausgebildet sind zur Verrastung in zwei Konterringen (8) und (12) zu beiden Seiten des plattenförmigen Leiters (3).

2. Clip nach Anspruch 1, **dadurch gekennzeichnet,**
**daß** die Rastschulter (7) ein doppelter Kegelstumpf ist, der den äußeren Durchmesser des Hülsenmantels (4) aufweitet, spitzwinkeling vorsteht und stumpfwinkeling in Richtung des Endes abnimmt, das in Richtung der Clipverbindung liegt, wobei seine Kanten gerundet sind, um das Clipverbindungsspiel zu vergrößern.

3. Clip nach Anspruch 1, **dadurch gekennzeichnet,**
**daß** an einem Ende der Hülse eine Krempe (10) mit senkrecht zur Hülsenachse verlaufender Auflagefläche (11) ausgebildet ist.

4. Clip nach einem der vorstehenden Ansprüche, **dadurch gekennzeichnet, daß** mehrere zum gleichen Ende hin offene Schlitze mit gleichem Winkelabstand zueinander auf der Hülse (4) verteilt angeordnet sind.

5. Clip nach Anspruch 1, **dadurch gekennzeichnet,**
**daß** jeweils 4 Schlitze (6) in Abhängigkeit der Verbindungskraft zu jedem Ende der Hülse (4) orientiert vorgesehen sind, wobei die Breite der Schlitze für die Anpassung der Verbindungskraft variabel ist, wobei der Winkelabstand zwischen jedem benachbarten Schlitz gleich 90° oder geringer in Abhängigkeit der Gesamtanzahl der Schlitze ist.

6. Clip nach Anspruch 1, **dadurch gekennzeichnet,**
**daß** die Schlitze (6) tiefer sind, so daß der Körper die Hülse (4) und die doppelt kegelstumpfförmige Klauen (16) bildet, die in eingeschnürte Rillen (17) eingreifen, die durch Zähne (15) innerhalb der Öffnung (2) des Leiters (3) gebildet sind, wobei die Zähne (15) Rastschultern bilden, die die Rotation des Clips verhindern.

7. Clip nach einem der vorstehenden Ansprüche, **dadurch gekennzeichnet,**
**daß** der Konterring (8 oder 12) im Bereich zwischen der Ringnute (9) und dem der Leiterplatte (3) zugewandten Ende (13) einen Innendurchmesser hat, der dem Außendurchmesser des Hülsenkörpers (4) entspricht.

8. Clip nach Anspruch 5, **dadurch gekennzeichnet, daß** der Innendurchmesser des Konterrings (8 und 12) im Bereich zwischen der Ringnut (9) und dem der Leiterplatte abgewandten Ende gleich dem Innendurchmesser der Hülse (4) ist.

9. Verwendung eines Clips nach einem der vorstehenden Ansprüche zur Kontaktierung eines Busbarleiters mit einem Kontaktstift.

## Revendications

1. Clip (1) pour la mise en contact électrique et mécanique et le maintien d'une broche de contact dans une ouverture (2) d'un conducteur (3) en forme de feuille ou de plaque, comportant une douille cylindrique (4) qui présente au moins à l'une de ses extrémités des épaulements (5) de montage au bord de l'ouverture ou sur une pièce intercalée, dans lequel la douille (4) présente au moins à l'une de ses extrémités des fentes ouvertes (6) s'étendant parallèlement à l'axe principal de la douille, le bord de la douille à cette extrémité étant en saillie au-dessus de la surface environnante et en forme de cône tronqué réalisant une surface d'arrêt (7), grâce à laquelle la douille peut s'enclencher dans une rainure annulaire (9) correspondante réalisée dans la surface d'un contre-anneau (8),
**Caractérisé en ce que**
Aux deux extrémités de la douille sont réalisées des surfaces d'arrêt tronconiques (7), en complément des fentes (6) débouchantes, de manière à permettre à deux contre-anneaux (8 ; 12) d'être mis en place de chaque côté du conducteur (3) sous forme de feuille ou de plaque.

2. Clip selon la revendication 1, **caractérisé en ce que** la surface d'arrêt (7) est un double cône tronqué qui élargit le diamètre extérieur de l'enveloppe de la douille (4) à l'aide d'un angle aigu et qui se réduit vers l'extrémité dans le sens du clipsage à l'aide d'un angle à faible pente, les angles étant adoucis de manière à laisser un jeu de clipsage plus important.

3. Clip selon la revendication 1, **caractérisé en ce que** un rebord (10) est réalisé à l'une des extrémités de la douille, ledit rebord comportant une surface d'appui (11) qui s'étend dans un plan perpendiculaire à l'axe principal de la douille.

4. Clip selon l'une quelconque des revendications précédentes, **caractérisé en ce que** plusieurs fentes (6) ouvertes à la même extrémité et séparées l'une de l'autre d'un même angle, sont disposées sur la douille (4).

5. Clip selon la revendication 1, **caractérisé en ce que** au moins quatre fentes (6) , suivant l'effort de clipsage, sont orientées vers chaque extrémité de la douille (4), la largeur des fentes étant variable pour permettre le réglage de l'effort de clipsage et les distances angulaires entre deux axes de fentes voisins étant de 90°chacune, ou moins suivant le nombre total desdites fentes.

6. Clip selon la revendication 1, **caractérisé en ce que** les fentes (6) sont plus profondes de telle sorte que le corps de douille(4) et son extrémité en forme de double cône forment des griffes (16) pénétrant dans des rainures (17) en forme de haricot, délimitées par des dents (15) à l'intérieur de l'ouverture (2) du conducteur (3), lesdites dents (15) constituant ainsi des surfaces d'arrêt interdisant la rotation du clip.

7. Clip selon l'une quelconque des revendications précédentes, **caractérisé en ce que**, dans la zone située entre la rainure annulaire (9) et l'extrémité (13) en regard de la feuille ou de la plaque conductrice (3), le diamètre intérieur du contre-anneau (8 ; 12) correspond au diamètre extérieur du corps de la douille (4).

8. Clip selon la revendication 5, **caractérisé en ce que**, dans la zone située entre la rainure annulaire (9) et l'extrémité (14) à l'opposé de la feuille ou de la plaque conductrice (3), le diamètre intérieur du contre-anneau (8 ; 12) correspond au diamètre intérieur de la douille.

9. Utilisation d'un clip tel que revendiqué dans l'une quelconque des revendications précédentes pour la mise en contact d'une broche de contact avec un conducteur busbar.
